# EUROPÄISCHE PATENTSCHRIFT

(11) **EP 1 270 682 B1**
(45) Veröffentlichungstag und Bekanntmachung des Hinweises auf die Patenterteilung: **25.01.2017**
(21) Anmeldenummer: 02010214.1
(22) Anmeldetag: 16.05.2002
(51) Int. Cl.: C09C 1/00

(54) **MEHRSCHICHTIGE GLANZPIGMENTE**
MULTILAYERED INTERFERENCE PIGMENT
PIGMENT PERLESCENT À COUCHES MULTIPLES

(30) Priorität: 12.06.2001 DE 10128489
(43) Veröffentlichungstag der Anmeldung: 02.01.2003
(73) Patentinhaber: Merck Patent GmbH, 64293 Darmstadt (DE)
(72) Erfinder: Andes, Stephanie, 63452 Hanau (DE); Fuchs-Pohl, Gerald, Dr., 64331 Weiterstadt (DE); Friz, Martin, Dr., 64297 Darmstadt (DE); Pfaff, Gerhard, Dr., 64839 Münster (DE); Raabe, Siegfried, Dr., 64347 Griesheim (DE); Uhlig, Michael, 64297 Darmstadt (DE)

(56) Entgegenhaltungen:
- EP-A- 0 668 329
- EP-A- 0 708 154
- WO-A-00/34395

## Beschreibung

Die Erfindung betrifft mehrschichtige Glanzpigmente auf der Basis von metallischen Substraten, ein Verfahren zu deren Herstellung sowie deren Verwendung.

Mehrschichtige Glanzpigmente mit zentralen Schichten aus reflektierenden Materialien, insbesondere Metallen, sind bekannt und finden breite Verwendung in vielen Bereichen der Technik, so zum Beispiel für die Herstellung von Autolacken und dekorativen Beschichtungsmaterialien sowie zum Pigmentieren von Kunststoffen, Farben, Druckfarben, Papier, insbesondere für den Sicherheitsdruck, und dergleichen mehr.

In JP H7-759(A) wird ein mehrschichtiges Interferenzpigment mit metallischem Glanz offenbart, welches aus einem Substrat aus Aluminium-, Gold- oder Silberplättchen oder Plättchen aus Glimmer oder Glas, die mit Metallen beschichtet sind, und darauf befindlichen alternierenden Schichten aus Titandioxid und Siliziumdioxid besteht. Dieses Pigment besitzt ein hohes Deckvermögen. Der metallische Kern reflektiert das auftreffende Licht jedoch sehr stark, so dass der durch die Metalloxidschichten hervorgerufene Interferenzeffekt nur in sehr geringem Maße erkennbar ist und der harte metallische Glanz das Erscheinungsbild der Pigmente dominiert.

In US 4,434,010 sind Pigmente mit einer zentralen Schicht aus einem opaken, reflektierenden Material, zum Beispiel Aluminium, Gold, Kupfer oder Silber beschrieben, welche auf beiden Seiten mit einer ersten Schicht aus einem niedrig brechenden dielektrischen Material wie Siliziumdioxid, Magnesiumfluorid oder Aluminiumoxid und einer zweiten, semiopaken Metallschicht aus Chrom, Nickel oder Inconel beschichtet sind.

Diese Pigmente werden vorrangig für den Druck von Wertpapieren eingesetzt und zeigen mit dem Betrachtungswinkel wechselnde Farben, sind jedoch auf Grund ihres Herstellungsverfahrens nicht auf allen Seiten des Metallkerns vollständig von den äußeren Schichten umhüllt, was zu Verarbeitungsproblemen in Beschichtungslösungen führen kann.

Pigmente aus einem mehrlagigen Interferenzfilm, die einen Farbverlauf aufweisen, sind in US 6,157,489 beschrieben. Diese besitzen eine zentrale Reflexionsschicht aus Aluminium, Silber, Kupfer und dergleichen, auf welcher beidseitig Schichten aus hochbrechenden dielektrischen Materialien wie beispielsweise Titandioxid, Zinksulfid oder Yttriumoxid und darauf eine Absorptionsschicht aus Chrom, Nickel, Palladium, Titan etc. aufgebracht sind. Auch diese Pigmente besitzen Substrate, die nicht vollständig von den äußeren Schichten umhüllt sind, wodurch wiederum Verarbeitungsprobleme auftreten können.

Aus der DE 44 37 753 sind mehrfach beschichtete metallische Glanzpigmente bekannt, welche auf metallischen Substraten ein Schichtpaket aus
(A) einer farblosen Beschichtung mit einem Brechungsindex n ≤ 1,8 und
(B) einer selektiv absorbierenden Beschichtung mit einem Brechungsindex n ≥ 2,0
   sowie gewünschtenfalls zusätzlich
(C) eine äußere, farblose oder selektiv absorbierende, von der darunter liegenden Schicht (B) verschiedene Beschichtung aufweisen.

Dabei besteht die Schicht (A) beispielsweise aus Siliziumdioxid, Aluminiumoxid oder Magnesiumfluorid, während die Schicht (B) aus selektiv absorbierenden hochbrechenden Oxiden oder aus "eingefärbten" farblosen hochbrechenden Oxiden zusammengesetzt ist. Diese Pigmente sollen über interessante koloristische Eigenschaften verfügen und zur Erzeugung eines Farbflops, d.h. eines wechselnden farbigen Erscheinungsbildes in Abhängigkeit vom Betrachtungswinkel, geeignet sein WO00/34395 A1 offenbart ein mehrschichtiges Glanzpigment, umfassend einen mehrschichtigen, filmartigen Aufbau. EP0708154 A2 offenbart 2-schichtige Pigmente bestehend aus einem Metallsubstrat, einer farblosen, niedrig brechenden Beschichtung und einer, auf der niedrig brechenden Beschichtung aufgebrachten, selektiv absorbierenden, hochbrechenden Beschichtung. DE19836810 A Mehrschichtpigmente auf der Basis von plättchenförmigen Metallsubstraten, die mit zwei Metalloxidschichten belegt sind.

Den aus den drei letztgenannten Veröffentlichungen bekannten Pigmenten ist gemeinsam, dass die Interferenzfarbe der Pigmente im Wesentlichen durch die Brechzahl und die Dicke der ersten Schicht auf dem metallischen Substrat, die entweder eine niedrige oder eine hohe Brechzahl aufweist, sowie durch die Farbabsorption der darauf befindlichen Schicht bestimmt wird. Die Winkelabhängigkeit und die Farbintensität der Interferenzfarbe wird dagegen nur durch die Zusammensetzung und Dicke der ersten Schicht gesteuert. Es fehlt daher an Einflussmöglichkeiten, mit denen eine Feineinstellung der Farbintensität der Interferenzfarbe und /oder der Breite des Bereiches, in welchem ein winkelabhängiger Farbflop stattfindet, vorgenommen werden kann.

Es war daher die Aufgabe der Erfindung, mehrschichtige Glanzpigmente auf der Basis metallischer Substrate zur Verfügung zu stellen, welche über ein hohes Deckvermögen, eine hohe Farbintensität und/oder eine starke Winkelabhängigkeit der Interferenzfarbe über einen breiten Bereich verfügen und deren gewünschte Farbeigenschaften in einfacher Weise eingestellt werden können, sowie ein Verfahren zu deren Herstellung bereitzustellen und geeignete Verwendungsmöglichkeiten aufzuzeigen.

Diese Aufgabe wird erfindungsgemäß durch mehrschichtige Glanzpigmente nach Anspruch 1 gelöst.

Gegenstand der Erfindung ist ebenfalls ein Verfahren zur Herstellung der oben definierten Glanzpigmente, in welchem metallische Substrate nasschemisch durch Fällung, Hydrolyse oder Reduktion von Metallsalzen im wässrigen oder organischen Medium und/oder durch CVD- oder PVD-Verfahren mit den Schichten (A), (B) und optional (C) beschichtet werden.

Gegenstand der Erfindung ist weiterhin die Verwendung der erfindungsgemäßen Pigmente in Farben, Lacken, Druckfarben, Kunststoffen, kosmetischen Formulierungen, keramischen Materialien, Gläsern, Papier, zur Lasermarkierung sowie für Sicherheitsanwendungen.

Das metallische Substrat ist lichtundurchlässig und reflektierend und kann alle für Metalleffekte bekannten Metalle und Legierungen, vorzugsweise in Plättchenform, umfassen, so zum Beispiel Eisen, Stahl, insbesondere Edelstahl, Aluminium, Kupfer, Nickel, Chrom, Zink, Zinn, Silber, Gold, Platin, Kobalt, Lanthanide und Titan sowie Mischungen oder Legierungen aus zwei oder mehreren Metallen, wie Messing oder Bronzen. Insbesondere sind alle bekannten handelsüblichen Metallpulver geeignet, die in Wasser weitgehend stabil sind oder durch geeignete Maßnahmen stabilisiert werden können.

Dabei sind plättchenförmige Aluminiumpartikel bevorzugt, welche durch übliche Techniken wie das Herausstanzen aus Folien oder Verdüsungs- und Mahlverfahren in einfacher Weise zugänglich sind. Dabei können auch Aluminiumfolien gebrochen und gemahlen werden, oder es werden grobe Aluminiumpartikel bis auf die gewünschte Größe zerkleinert und anschließend klassiert. Zur Herstellung solcher Partikel sind insbesondere die in US 3,949,139 und WO 00/24946 beschriebenen Verfahren geeignet.

Werden gängige Handelsprodukte aus den oben genannten Metallen eingesetzt, so sollten deren Oberflächen jedoch weitestgehend fettfrei sein, was durch Behandlung mit geeigneten Lösungsmitteln oder durch oxydative Behandlung, zum Beispiel gemäß DE-A-42 23 384, erreicht werden kann.
Es ist auch bevorzugt, wenn die metallischen Substrate vor der Beschichtung einer Passivierungsbehandlung unterzogen werden, wie sie beispielsweise in DE 42 36 332 und DE 44 14 079 beschrieben ist. Dadurch wird der Einsatz der erfindungsgemäßen Pigmente auch in wässrigen Beschichtungssystemen problemlos möglich.

Die Größe der metallischen Substratteilchen wird an den jeweiligen Verwendungszweck der erfindungsgemäßen Pigmente angepasst und ist an sich nicht kritisch. Üblicherweise liegt der mittlere Durchmesser der Substratteilchen im Bereich von etwa 1 bis 250 µm, vorzugsweise 2 bis 200 µm und insbesondere 5 bis 50 µm, während die mittlere Dicke größer als 0,15 und bis zu 3 µm, vorzugsweise zwischen 0,2 und 2 µm beträgt.
Die nach dem BET-Verfahren gemessene spezifische Oberfläche beträgt im allgemeinen 0,5-30 m²/g.
Werden Aluminiumplättchen eingesetzt, so weisen diese in der Regel eine mittlere Dicke von größer als 0,15 bis 1µm, einen mittleren Durchmesser von 2 bis 100 µm sowie eine spezifische BET-Oberfläche von 0,5 bis 30 m²/g auf.

Das Schichtpaket (A) besteht aus einer farblosen dielektrischen Schicht i) aus einem Material mit einer Brechzahl n ≤ 1,8 und einer farblosen dielektrischen Schicht ii) aus einem Material mit einer Brechzahl n > 1,8.

Die Reihenfolge dieser Schichten ist nicht festgelegt und kann in Abhängigkeit von den gewünschten Farbeffekten bestimmt werden. Überraschenderweise wurde festgestellt, dass die Reihenfolge des Schichtauftrages die Farbeigenschaften des resultierenden Pigmentes wesentlich beeinflusst, obwohl die aus dem Stand der Technik bekannten Pigmente, die entweder eine Schicht i) oder eine Schicht ii) bei ansonsten identischem Schichtaufbau aufweisen, im wesentlichen über miteinander vergleichbare optische Eigenschaften verfügen.

Wird auf dem metallischen Substrat zuerst eine Schicht i) mit einer Brechzahl von n ≤ 1,8 und danach eine Schicht ii) mit einer Brechzahl von n > 1,8 aufgebracht, so lassen sich gegenüber dem Aufbringen von Einzelschichten, unabhängig von deren Brechzahl, bei ansonsten identischem Schichtaufbau eine Erhöhung der Intensität der Interferenzfarbe und/oder eine Verbreiterung des Farbbereiches, in dem ein Farbflop abhängig vom Betrachtungswinkel beobachtet werden kann, feststellen.

Wird dagegen auf dem metallischen Substrat zuerst eine Schicht ii) mit einer Brechzahl von n > 1,8 und danach eine Schicht i) mit einer Brechzahl von n ≤ 1,8 aufgetragen, so lässt sich bei ansonsten identischem Schichtaufbau neben einer Erhöhung der Intensität der Interferenzfarbe auch ein Farbflop in Abhängigkeit vom Betrachtungswinkel einstellen, welcher nicht wie üblicherweise bei Pigmenten mit nur einer dielektrischen Schicht und ansonsten identischem Schichtaufbau, die aus dem Stand der Technik bekannt sind, einen Farbverlauf von einer Interferenzfarbe über alle denkbaren Zwischentöne zur nächsten Interferenzfarbe zeigt, sondern bei welchem sich zwei verschiedene Interferenzfarben über ein Unbunt bei der Änderung des Betrachtungswinkels miteinander abwechseln. Damit lässt sich zum Beispiel ein harter Farbwechsel von Purpur über Unbunt nach Grün einstellen.

Durch die Gestaltung der Reihenfolge der Schichten i) und ii) sowie über die Auswahl der Materialien für diese Schichten und die Bestimmung der individuellen Dicken der Schichten ergeben sich für den Fachmann daher eine Vielzahl von Möglichkeiten, optisch attraktive Glanzpigmente für die verschiedensten Anwendungsbereiche gezielt herstellen zu können. Die dafür erforderlichen Einzelmaßnahmen sind dem Fachmann allgemein bekannt und erfordern kein erfinderisches Zutun.

Das Schichtpaket (A) ist in den erfindungsgemäßen Pigmenten ein- oder mehrfach, bevorzugt jedoch einfach vorhanden.

Die farblose dielektrische Schicht i) aus einem Material mit einer Brechzahl n ≤ 1,8 ist aus geeigneten Metallverbindungen wie Metalloxiden, Metallfluoriden, Metalloxidhydraten, Metallphosphaten oder deren Gemischen zusammengesetzt, die sich filmartig und dauerhaft aufbringen lassen.
Beispiele hierfür sind SiO₂, SiO(OH)₂, Al₂O₃, AlO(OH), B₂O₃, MgF₂, MgSiO₃ oder Aluminiumphosphat.
Bevorzugt sind SiO₂, Al₂O₃ und MgF₂ oder deren Gemische und besonders bevorzugt SiO₂.
Die Dicke dieser Schicht ist im allgemeinen größer als 150 und bis zu 1000 nm, vorzugsweise 200 bis 600 nm.

Für die farblose dielektrische Schicht ii) aus einem Material mit einer Brechzahl n > 1,8 werden Metallverbindungen, vorzugsweise Metalloxide, Metallsulfide oder deren Gemische eingesetzt, beispielsweise TiO₂, ZrO₂, SiO, CeO₂, HfO₂, Pr₂O₃, Y₂O₃, Ta₂O₅, ZnO, SnO₂, Ca₂O₃, BiOCl, ZnS, bevorzugt jedoch TiO₂ und ZnS und insbesondere TiO₂. Letzteres kann dabei sowohl in einer Rutil- als auch einer Anatasmodifikation vorliegen.

Diese Schicht weist eine Dicke von 30 bis 500 nm und insbesondere von 200 bis 350 nm auf.

Die selektiv oder nichtselektiv absorbierende Schicht (B) ist hinsichtlich der Brechzahl des aufgebrachten Materials oder Materialgemisches nicht beschränkt und kann sowohl hochbrechende als auch niedrigbrechende Materialien umfassen. Sie ist jedoch mindestens teilweise lichtdurchlässig (semiopak) und muss daher bezüglich ihrer Schichtdicke sorgfältig auf die verschiedenen eingesetzten Materialien abgestimmt werden.

Als Materialien kommen insbesondere Metalle wie beispielsweise Chrom, Wolfram, Kobalt, Nickel, Kupfer, Molybdän, Eisen, Silber, Gold, Palladium, Titan, Vanadium, Niob, Platin, aber auch Aluminium sowie Mischungen oder Legierungen aus zwei oder mehreren Metallen in Betracht.

Ebenso geeignet sind jedoch auch Metalloxide, insbesondere solche, die von sich aus absorbierend sind, aber auch solche, die durch Einlagerung von oder Beschichtungen mit absorbierenden Materialien absorbierend gemacht werden können.
Besonders geeignete Metalloxide sind hierbei die verschiedenen Eisenoxide wie Magnetit, Goethit oder Eisen(III)oxide unterschiedlicher Modifikationen, verschiedene Kobaltoxide (CoO, Co₃O₄), Chrom(III)oxid, Titan(III)oxid und die bekannten farbigen Titansuboxide, verschiedene Vanadiumoxide (VO₂, V₂O₃) oder auch Mischoxide wie Pseudobrookit (Fe₂TiO₅) und Ilmenit (FeTiO₃) sowie deren Mischungen.
Metalloxide, die durch Einlagerung absorbierender Partikel wie Ruß oder Kohlenstoff sowie durch Einlagerung von selektiv absorbierenden Farbmitteln, durch Dotieren mit Metallkationen oder durch Überziehen mit einem ein Farbmittel enthaltenden Film absorbierend gemacht werden können, sind zum Beispiel Zirkondioxid oder Titandioxid, die ebenfalls im Gemisch mit einer oder mehreren der oben genannten Substanzen eingesetzt werden können.

Für die Schicht (B) können jedoch auch Metallsulfide wie Kobaltsulfid, Nickelsulfid, Chromsulfid, Eisensulfid, Wolframsulfid, Molybdänsulfid, Cersulfid sowie deren Gemische untereinander oder mit Metalloxiden oder Metallen eingesetzt werden, sowie auch Metallnitride wie Titannitrid oder Titanoxynitrid.

Die Schichtdicke der Schicht (B) bestimmt sich aus dem eingesetzten Material und dem Erfordernis, dass diese Schicht für das sichtbare Licht mindestens noch teilweise durchlässig sein muss.

Für nichtselektiv absorbierende Materialien liegt die Dicke dieser Schicht bei etwa 5 bis 100 nm, wobei der untere Bereich von 5 bis 25 nm, insbesondere 5 bis 20 nm, für stark absorbierende Metalle wie Chrom und Molybdän ausreichend ist.

Werden dagegen selektiv absorbierende Metalloxide eingesetzt, kann die Dicke der Schicht (B) 5 bis 500 nm, vorzugsweise 10 bis 100 nm, betragen.

In der vorliegenden Erfindung besteht die Schicht (B) vorzugsweise aus Chrom mit einer Schichtdicke von 5 bis 20 nm, aus Fe₂O₃ mit einer Schichtdicke von 10 bis 100 nm, oder aus Aluminium mit einer Schichtdicke von 5 bis 30 nm.

Durch die selektiv oder nicht selektiv absorbierende Schicht (B) wird die Reflexion des auftreffenden sichtbaren Lichtes an dem metallischen Substrat abgeschwächt und der durch die Zwischenschichten i) und ii) eingestellte Farbeffekt verstärkt. Insbesondere bei der Einarbeitung der erfindungsgemäßen Pigmente in die üblichen Farblacksysteme kommen daher die optischen Vorteile dieser Pigmente wie erhöhte Intensität der Interferenzfarben verbunden mit einem hohen Deckvermögen und metallischem Glanz, sowie die gezielt eingestellten erweiterten Farbbereiche für den Farbflop oder ein gewollter harter Farbwechsel von einer Farbe in eine andere ohne Zwischenfarbtöne gut zur Geltung.

Die erfindungsgemäßen Glanzpigmente können optional auch eine äußere Schicht (C) aufweisen. Diese soll vorzugsweise die darunter liegende Schicht (B) schützen und die Pigmente auf diese Weise stabilisieren.
Als Materialien für die äußere Schicht (C) können farblose oder selektiv absorbierende Metalloxide wie zum Beispiel SiO₂, SiO(OH)₂, Al₂O₃, AlO(OH), SnO₂, TiO₂, ZrO₂, CeO₂, Fe₂O₃ oder auch Cr₂O₃, die auch phosphat-, chromat-, vanadat- oder phosphathaltig sein können, eingesetzt werden.
Es kann jedoch auch eine Nachbehandlung erfolgen, durch welche sowohl die chemische Stabilität der Pigmente erhöht als auch ihre Handhabung, insbesondere die Erleichterung des Einbringens in verschiedene Medien, verbessert werden soll.
Dafür kommen insbesondere Verfahren in Frage, welche in DE 22 15 191, DE 31 51 354, DE 32 35 017, DE 33 34 598, DE 40 30 727, EP 0 649 886, WO 97/29059, WO 99/57204 oder US 5,759,255 beschrieben sind.
Die Schicht (C) ist im allgemeinen etwa 1 bis 500 nm dick.

Die erfindungsgemäßen Glanzpigmente können zwischen dem metallischen Substrat und dem Schichtpaket (A) und/oder zwischen dem Schichtpaket (A) und der Schicht (B) noch eine zusätzliche dielektrische Schicht enthalten, welche aus Metalloxiden, Metallfluoriden, Metallsulfiden, Metallnitriden oder deren Gemischen besteht.

Das Verfahren zur Herstellung der erfindungsgemäßen Glanzpigmente kann sowohl ein Verfahren sein, bei dem auf dem plättchenförmigen metallischen Träger alle Schichten (A), (B) und (C), insbesondere das Schichtpaket (A) und die Schicht (B) nasschemisch durch Fällung, Hydrolyse und/oder Reduktion anorganischer oder organischer Metallverbindungen aufgebracht werden, als auch ein Verfahren, bei dem alle aufzubringenden Schichten (A) und (B) über die Gasphasenzersetzung geeigneter Verbindungen oder ein PVD-Verfahren aufgebracht werden, oder ein Verfahren, bei dem je nach Zusammensetzung der Schichten (A) und (B) mehrere Verfahren in Kombination eingesetzt werden.

Ein nasschemisches Verfahren sowohl für das Schichtpaket (A) als auch für die Schicht (B) kommt nur dann in Frage, wenn neben den Schichten i) und ii) auch die Schicht (B) aus nasschemisch abscheidbaren Materialien, beispielsweise aus selektiv absorbierenden Metalloxiden oder aber auch aus bestimmten Metallen, zusammengesetzt ist.

Als nasschemisches Verfahren kommt dabei sowohl die Fällung, Hydrolyse und/oder Reduktion metallorganischer wie auch anorganischer Metallverbindungen in Betracht, wobei die zur Herstellung von Perlglanzpigmenten entwickelten Beschichtungsverfahren angewendet werden; derartige Verfahren sind z.B. beschrieben in DE 14 67 468, DE 19 59 988, DE 20 09 566, DE 22 14 545, DE 22 15 191, DE 22 44 298, DE 23 13 331, DE 25 22 572, DE 31 37 808, DE 31 37 809, DE 31 51 343, DE 31 51 354, DE 31 51 355, DE 32 11 602, DE 32 35 017 oder auch in weiteren Patentdokumenten und sonstigen Publikationen.

Bei der Fällung anorganischer Metallverbindungen werden die Substratpartikel in Wasser suspendiert und mit einem oder mehreren hydrolysierbaren Metallsalzen bei einem für die Hydrolyse geeigneten pH-Wert versetzt, der so gewählt wird, dass die Metalloxide bzw. Metalloxidhydrate direkt auf den Partikeln niedergeschlagen werden, ohne dass es zu Nebenfällungen kommt. Der pH-Wert wird üblicherweise durch gleichzeitiges Zudosieren einer Säure oder Base konstant gehalten. Anschließend werden die Pigmente abgetrennt, gewaschen und getrocknet und gegebenenfalls kalziniert, wobei die Temperatur im Hinblick auf die jeweils vorliegende Beschichtung optimiert werden kann. Falls gewünscht können die Pigmente nach Aufbringen einzelner Beschichtungen abgetrennt, getrocknet und ggf. kalziniert werden, um dann zur Auffällung der weiteren Schichten wieder resuspendiert zu werden.

Metallorganische Verbindungen, wie zum Beispiel die Metallalkoholate, werden in Gegenwart der Substratteilchen und eines organischen Lösungsmittels, welches mit Wasser mischbar ist und in welchem die Metallverbindungen löslich sind, hydrolysiert. Werden zum Beispiel Tetraethoxysilan oder Aluminiumtriisopropanolat verwendet, können diese in Gegenwart eines Alkohols, insbesondere Isopropanol, und von wässrigem Ammoniak als Katalysator, hydrolytisch zersetzt werden. Auf diese Weise kann das Substrat mit einer SiO₂ oder Al₂O₃-Schicht beschichtet werden. Dieses Verfahren wird in DE 44 05 492 genauer beschrieben.

Es können jedoch auch Metallschichten auf nasschemischem Wege abgeschieden werden. Hierbei wird ein Substrat, welches in der Regel vorbeschichtet ist und gegebenenfalls speziell vorbehandelt wurde, in eine Lösung aus einem Metallsalz in einer geeigneten Flüssigkeit eingetragen. Nach dem Zusetzen eines Reduktionsmittels bildet sich auf dem Substrat ein metallischer Film. Verfahren dieser Art sind genauer in US 3,440,075 sowie US 3,536,520 beschrieben.

Weiterhin können die einzelnen Schichten der erfindungsgemäßen Pigmente auch in einem Wirbelbettreaktor durch Gasphasenbeschichtung abgeschieden werden, wobei z.B. die in EP 0 045 851 und EP 0 106 235 zur Herstellung von Perlglanzpigmenten vorgeschlagenen Verfahren entsprechend angewendet werden.

Die einzelnen Schichten können auch nach bekannten Verfahren durch Sputtern von Metallen, beispielsweise von Aluminium oder Chrom oder von Legierungen, wie zum Beispiel Chrom-Nickel-Legierungen sowie von Metalloxiden, beispielsweise von Titanoxid, Siliciumoxid oder Indium-Zinn-Oxid oder durch thermisches Verdampfen von Metallen oder Metalloxiden hergestellt werden.

Im folgenden soll das Aufbringen der Schichten durch Aufdampfen näher beschrieben werden:
Für die Herstellung des Schichtsystems auf dem Substrat kann eine Bedampfungsanlage eingesetzt werden, die aus den üblichen Komponenten, wie Vakuumkessel, Vakuumpumpsystem, Druckmess- und Steuereinheiten, Verdampfereinrichtungen, wie Widerstandsverdampfer oder Elektronenstrahlverdampfer, Vorrichtung zur Einstellung bestimmter Druckverhältnisse sowie einem Gaseinlass- und Regelsystem für Sauerstoff besteht.

Die Hochvakuumaufdampftechnik ist ausführlich beschrieben in Vakuum-Beschichtung, Bände 1-5; Herausgeber Frey, Kienel u. Löbl, VDI-Verlag 1995.

Das Aufbringen der Schichten durch Sputter-Verfahren erfolgt auf folgende Weise:
Beim Sputterverfahren oder bei der Kathodenzerstäubung wird zwischen dem Träger und dem Beschichtungsmaterial, das in Form von Platten (Target) vorliegt, eine Gasentladung (Plasma) gezündet. Das Beschichtungsmaterial wird durch energiereiche Ionen aus dem Plasma, z.B. Argonionen, beschossen und dadurch abgetragen bzw. zerstäubt. Die Atome oder Moleküle des zerstäubten Beschichtungsmaterials werden auf dem Substrat niedergeschlagen und bilden die gewünschte dünne Schicht.

Für Sputterverfahren eignen sich besonders Metalle oder Legierungen. Diese können mit vergleichsweise hohen Geschwindigkeiten, insbesondere im sogenannten DC-Magnetron-Verfahren, zerstäubt werden.

Verbindungen wie Oxide oder Suboxide oder Mischungen aus Oxiden können durch Einsatz des Hochfrequenz-Sputtern ebenfalls zerstäubt werden. Die chemische Zusammensetzung der Schichten wird durch die Zusammensetzung des Beschichtungsmaterials (Target) bestimmt. Sie kann aber auch durch Zusätze zum Gas, das das Plasma bildet, beeinflusst werden. Insbesondere werden Oxid- oder Nitridschichten durch Zusatz von Sauerstoff oder Stickstoff im Gasraum hergestellt.

Die Struktur der Schichten kann durch geeignete Maßnahmen, wie Beschuss der aufwachsenden Schichten durch Ionen aus dem Plasma, beeinflusst werden.

Das Sputterverfahren ist ebenfalls beschrieben in Vakuum-Beschichtung, Bände 1-5; Herausgeber Frey, Kienel und Löbl, VDI-Verlag 1995.

Zur Herstellung der erfindungsgemäßen Glanzpigmente ist eine Anpassung des Hochvakuumbedampfungsverfahrens an das in Pulverform vorliegende Substrat unbedingt erforderlich. Dazu ist es notwendig, das Substrat während des Bedampfungsverfahrens im Vakuumkessel gleichmäßig in Bewegung zu halten, um eine homogene Beschichtung aller Partikeloberflächen zu gewährleisten.

Dies gelingt zum Beispiel durch den Einsatz von rotierenden Behältern oder die Verwendung von Vibrationsvorrichtungen.

Die erfindungsgemäßen Pigmente sind mit einer Vielzahl von Farbsystemen kompatibel, vorzugsweise aus dem Bereich der Lacke, Farben und Druckfarben. Weiterhin sind die Pigmente auch für die Lasermarkierung von Papier und Kunststoffen, sowie für Anwendungen im Agrarbereich, z.B. für Gewächshausfolien, geeignet. Aufgrund ihrer hohen Farbkraft sind sie insbesondere auch in der dekorativen Kosmetik vorteilhaft einsetzbar. Sie eignen sich ebenso zur Herstellung von Pigmentpräparationen und Trockenpräparaten, wie z.B. Granulaten, Chips, Pellets, Briketts, etc., welche insbesondere in Druckfarben und Lacken Verwendung finden.

Es versteht sich von selbst, dass für die verschiedenen Anwendungszwecke die Mehrschichtpigmente auch vorteilhaft in Abmischung mit handelsüblichen Pigmenten, beispielsweise organischen Farbstoffen, organischen Pigmenten oder anderen Pigmenten, wie z.B. transparenten und deckenden Weiß, Bunt- und Schwarzpigmenten sowie mit plättchenförmigen Eisenoxiden, organischen Pigmenten, holographischen Pigmenten, LCPs (Liquid Crystal Polymers), und herkömmlichen transparenten, bunten und schwarzen Glanzpigmenten auf der Basis von metalloxidbeschichteten Glimmer- und SiO₂-Plättchen, etc., verwendet werden können. Die Mehrschichtpigmente können in jedem Verhältnis mit handelsüblichen Pigmenten und Füllern gemischt werden.

Die erfindungsgemäßen Glanzpigmente weisen ein hohes Deckvermögen auf und zeigen intensive Interferenzfarben. Abhängig von der Reihenfolge der aufgebrachten Schichten sind Farbeffekte wie z.B. eine Verbreiterung des Farbbereiches, in dem abhängig vom Belichtungs- oder Betrachtungswinkel Farbänderungen beobachtet werden können, oder aber ein harter Farbumschlag von einer Farbe in eine andere Farbe, ohne dass die üblichen Farbzwischentöne erkennbar sind, gezielt einstellbar. Diese Vorteile kommen in den üblichen Farblacksystemen, welche gängige Bindemittel und Zuschlagstoffe enthalten, besonders gut zum Tragen.

Mittels einfacher Beschichtungstechnologien können daher attraktive Pigmente zur Verfügung gestellt werden, welche in vielen Anwendungsbereichen vorteilhaft eingesetzt werden können.

Die vollständige Offenbarung aller vorstehend genannten Patentanmeldungen, Patente und Veröffentlichungen ist durch Bezugnahme in dieser Anmeldung enthalten.

Die nachfolgenden Beispiele sollen die Erfindung näher erläutern, ohne sie jedoch zu beschränken.

### Beispiele

### Beispiel 1

75 g passivierte Aluminium Flakes mit einer Teilchengröße von 10-50 µm und einer mittleren Dicke von 300 nm werden in 2 I voll entsalztem Wasser suspendiert und unter ständigem Rühren auf 75°C gebracht.
Der pH-Wert wird mit NaOH-Lösung (3%ig) auf 7,5 eingestellt.
Zu dieser Suspension dosiert man 750 g verdünnte NatronwasserglasLösung (W_{SiO2}=13,5%), wobei der pH-Wert durch gleichzeitige Zugabe einer 20%igen HCl-Lösung konstant auf 7,5 gehalten wird.
Nach beendeter Natronwasserglas-Zugabe wird zur Vervollständigung der Fällung noch 15 min nachgerührt.
Danach wird der pH-Wert durch Zutropfen von HCl (20%ig) abgesenkt auf 2,2.

Anschließend werden 50 g einer wässrigen TiCl₄-Lösung (167,5 g TiO₂/l) zudosiert, wobei der pH-Wert durch gleichzeitige Zugabe von 32%iger NaOH-Lösung konstant gehalten wird.
Nach beendeter Zugabe wird zur Vervollständigung der Fällung noch 15 min nachgerührt.

Anschließend lässt man auf Raumtemperatur abkühlen, filtriert das erhaltene Pigment ab, wäscht mit voll entsalztem Wasser salzfrei und trocknet bei 110°C.

Danach wird das Pulver 30 min bei 500°C kalziniert.

Über ein PVD-Verfahren wird anschließend eine 5 nm dicke Cr-Schicht abgeschieden.

Das fertige Pigment zeigt einen farbintensiven Goldton mit einem ausgeprägten Farbflop ins Blaugrün.

### Beispiel 2

75 g passivierte Aluminium Flakes mit einer Teilchengröße von 10-50 µm und einer mittleren Dicke von 300 nm werden in 380 ml Ethanol_{abs}. angeschlämmt und unter ständigem Rühren auf 40°C temperiert. 150 g Tetraethylorthotitanat werden zügig in 3000 ml Ethanol_{abs}. gelöst und auf 40°C gebracht. Unter intensivem Rühren wird diese Lösung, und davon getrennt, aber zur gleichen Zeit, 113 ml voll entsalztes Wasser zu der Aluminium Flake Suspension zudosiert. Anschließend werden weitere 280 ml voll entsalztes Wasser zudosiert.
Man lässt auf Raumtemperatur abkühlen, filtriert die erhaltene Zwischenstufe ab, wäscht mit Ethanol nach und trocknet bei 110°C.
Das beschichtete Material wird in 2 l voll entsalztem Wasser suspendiert und unter ständigem Rühren auf 75°C gebracht.
Der pH-Wert wird mit NaOH-Lösung (3%ig) auf 7,5 eingestellt.
Zu dieser Suspension dosiert man 1240 ml verdünnte NatronwasserglasLösung (W_{SiO2}=13,5%), wobei der pH-Wert durch gleichzeitige Zugabe einer 20%igen HCl-Lösung konstant auf 7,5 gehalten wird.
Nach beendeter Natronwasserglas-Zugabe wird zur Vervollständigung der Fällung noch 15 min nachgerührt.

Anschließend lässt man auf Raumtemperatur abkühlen, filtriert das erhaltene Pigment ab, wäscht mit voll entsalztem Wasser salzfrei und trocknet bei 110°C.
Danach wird das Pulver 30 min bei 500°C kalziniert.

Über ein PVD-Verfahren wird anschließend eine 5 nm dicke Cr-Schicht abgeschieden.

Das fertige Pigment zeigt einen ausgeprägten Farbwechsel von einem kräftigen Purpur über Unbunt nach einem intensiven Grün.

## Patentansprüche

1. Mehrschichtige Glanzpigmente, umfassend ein metallisches Substrat mit einer mittleren Dicke von größer als 0,15 bis zu 3 µm und mehrere Schichten, von denen jede das Substrat vollständig umhüllt, umfassend
(A) mindestens ein Schichtpaket, bestehend aus
i) einer farblosen dielektrischen Schicht aus einem Material mit einer Brechzahl n ≤ 1,8, welche eine Schichtdicke von größer als 150 und bis zu 1000 nm aufweist, und
ii) einer farblosen dielektrischen Schicht aus einem Material mit einer Brechzahl n > 1,8, welches TiO₂ in der Rutil- oder Anatasemodifikation, ZrO₂, SiO, CeO₂, HfO₂, Pr₂O₃, Y₂O₃, Ta₂O₅, ZnO, Ce₂O₃, BiOCl oder ZnS oder ein Gemisch derselben ist, und wobei die Schicht eine Schichtdicke von 30 bis 500 nm aufweist, sowie
(B) eine selektiv oder nichtselektiv absorbierende Schicht, und
wobei das Schichtpaket (A) aus einer Schicht i) auf dem plättchenförmigen metallischen Substrat und einer darauf aufgebrachten Schicht ii) oder
aus einer Schicht ii) auf dem plättchenförmigen metallischen Substrat und einer darauf aufgebrachten Schicht i) besteht.

2. Mehrschichtige Glanzpigmente gemäß Anspruch 1, wobei die mittlere Dicke des Substrats zwischen 0,2 und 2 µm beträgt.

3. Mehrschichtige Glanzpigmente gemäß Anspruch 1 oder 2, wobei das metallische Substrat plättchenförmig ist.

4. Mehrschichtige Glanzpigmente gemäß Anspruch 1 bis 3, die zusätzlich eine äußere Schicht (C) aufweisen.

5. Mehrschichtige Glanzpigmente gemäß einem oder mehreren der Ansprüche 1 bis 4, wobei das metallische Substrat aus Metallen, Metalllegierungen oder deren Gemischen besteht.

6. Mehrschichtige Glanzpigmente gemäß einem oder mehreren der Ansprüche 1 bis 5, wobei das Material mit einer Brechzahl n ≤ 1,8 für die Schicht i) ein Metalloxid, Metallfluorid, Metalloxidhydrat, Metallphosphat oder ein Gemisch derselben ist.

7. Mehrschichtige Glanzpigmente gemäß einem oder mehreren der Ansprüche 1 bis 6, wobei die selektiv oder nicht selektiv absorbierende Schicht aus einem mindestens teilweise lichtdurchlässigen Metall oder einem selektiv absorbierenden Metalloxid, Metallsulfid, Metallnitrid oder aus Legierungen oder Gemischen aus zwei oder mehreren besteht.

8. Mehrschichtige Glanzpigmente gemäß Anspruch 5, wobei das metallische Substrat aus Eisen, Stahl, Edelstahl, Aluminium, Kupfer, Nickel, Chrom, Zink, Zinn, Silber, Gold, Platin, Kobalt, Lanthaniden, Titan, Mischungen oder Legierungen derselben besteht.

9. Mehrschichtige Glanzpigmente gemäß Anspruch 6, wobei das Material mit einer Brechzahl n ≤ 1,8 für die Schicht i) SiO₂, SiO(OH)₂, Al₂O₃, AlO(OH), B₂O₃, MgF₂, MgSiO₃ oder Aluminiumphosphat oder ein Gemisch derselben ist.

10. Mehrschichtige Glanzpigmente gemäß Anspruch 9, wobei das Material mit einer Brechzahl n ≤ 1,8 für die Schicht i) SiO₂, Al₂O₃ oder MgF₂ oder ein Gemisch derselben ist.

11. Mehrschichtige Glanzpigmente gemäß Anspruch 10, wobei das Material mit einer Brechzahl n ≤ 1,8 für die Schicht i) SiO₂ ist.

12. Mehrschichtige Glanzpigmente gemäß Anspruch 1, wobei das Material mit einer Brechzahl n > 1,8 für die Schicht ii) TiO₂ oder ZnS ist.

13. Mehrschichtige Glanzpigmente gemäß Anspruch 12, wobei das Material mit einer Brechzahl n > 1,8 für die Schicht ii) TiO₂ ist.

14. Mehrschichtige Glanzpigmente gemäß Anspruch 7, wobei die selektiv oder nicht selektiv absorbierende Schicht (B) aus Chrom, Wolfram, Kobalt, Nickel, Kupfer, Molybdän, Aluminium, oder Magnetit, Goethit, Eisen(III)oxid, Kobaltoxid, Chrom(III)oxid, Titan(III)oxid, Titansuboxid, Vanadiumoxid, Pseudobrookit, Ilmenit oder Kobaltsulfid, Nickelsulfid, Chromsulfid, Eisensulfid, Wolframsulfid, Molybdänsulfid, Cersulfid oder Titannitrid oder Titanoxynitrid oder aus Gemischen derselben oder aus Legierungen aus zwei oder mehreren Metallen besteht.

15. Mehrschichtige Glanzpigmente gemäß Anspruch 14, wobei die selektiv oder nicht selektiv absorbierende Schicht (B) aus Chrom, Aluminium oder Eisen(III)oxid besteht.

16. Mehrschichtige Glanzpigmente gemäß Anspruch 1, wobei die Schicht i) eine Schichtdicke von 200 bis 600 nm aufweist.

17. Mehrschichtige Glanzpigmente gemäß Anspruch 1, wobei die Schicht ii) eine Schichtdicke von 200 bis 350 nm aufweist.

18. Verfahren zur Herstellung der mehrschichtigen Glanzpigmente gemäß einem oder mehreren der Ansprüche 1 bis 17, wobei ein metallisches Substrat nasschemisch durch Fällung, Hydrolyse oder Reduktion von Metallsalzen im wässrigen oder organischen Medium und/oder durch CVD- oder PVD-Verfahren mit den Schichten (A), (B) und optional (C) beschichtet wird.

19. Verwendung der mehrschichtigen Glanzpigmente gemäß einem oder mehreren der Ansprüche 1 bis 17 in Farben, Lacken, Druckfarben, Kunststoffen, kosmetischen Formulierungen, keramischen Materialien, Papier, Gläsern, zur Lasermarkierung, in Sicherheitsanwendungen sowie in Trockenpräparaten und Pigmentpräparationen.

20. Farben, Lacke, Druckfarben, Kunststoffe, kosmetische Formulierungen, keramische Materialien, Papier, Gläser, Trockenpräparate, Pigmentpräparationen und Materialien für Sicherheitsanwendungen, enthaltend ein Pigment gemäß den Ansprüchen 1 bis 17.

## Claims

1. Multilayered lustre pigments comprising a metallic substrate having an average thickness of greater than 0.15 to 3 µm and a plurality of layers, each of which completely surrounds the substrate, comprising
(A) at least one layer package consisting of
i) a colourless dielectric layer comprising a material having a refractive index n ≤ 1.8 which has a layer thickness of greater than 150 and up to 1000 nm, and
ii) a colourless dielectric layer comprising a material having a refractive index n > 1.8 which is TriO₂ in the rutile or anatase modification, ZrO₂, SiO, CeO₂, HeO₂, Pr₂O₃, Y₂O₃, Ta₂O₅, ZnO, Ce₂O₃, BiOCl or ZnS or a mixture thereof, and where the layer has a layer thickness of 30 to 500 nm, and
(B) a selectively or non-selectively absorbent layer, and
where the layer package (A) consists of a layer i) on the flake-form metallic substrate and a layer ii) applied thereto or
of a layer ii) on the flake-form metallic substrate and a layer i) applied thereto.

2. Multilayered lustre pigments according to Claim 1, where the average thickness of the substrate is between 0.2 and 2 µm.

3. Multilayered lustre pigments according to Claim 1 or 2, where the metallic substrate is in flake form.

4. Multilayered lustre pigments according to Claims 1 to 3, which additionally have an outer layer (C).

5. Multilayered lustre pigments according to one or more of Claims 1 to 4, where the metallic substrate consists of metals, metal alloys or mixtures thereof.

6. Multilayered lustre pigments according to one or more of Claims 1 to 5, where the material having a refractive index n ≤ 1.8 for layer i) is a metal oxide, metal fluoride, metal oxide hydrate, metal phosphate or a mixture thereof.

7. Multilayered lustre pigments according to one or more of Claims 1 to 6, where the selectively or non-selectively absorbent layer consists of an at least partially light-transmitting metal or a selectively absorbent metal oxide, metal sulfide, metal nitride or of alloys or mixtures of two or more thereof.

8. Multilayered lustre pigments according to Claim 5, where the metallic substrate consists of iron, steel, stainless steel, aluminium, copper, nickel, chromium, zinc, tin, silver, gold, platinum, cobalt, lanthanides, titanium, mixtures or alloys thereof.

9. Multilayered lustre pigments according to Claim 6, where the material having a refractive index n ≤ 1.8 for layer i) is SiO₂, SiO(OH)₂, Al₂O₃, AIO(OH), B₂O₃, MgF₂, MgSiO₃ or aluminium phosphate or a mixture thereof.

10. Multilayered lustre pigments according to Claim 9, where the material having a refractive index n ≤ 1.8 for layer i) is SiO₂, Al₂O₃ or MgF₂ or a mixture thereof.

11. Multilayered lustre pigments according to Claim 10, where the material having a refractive index n ≤ 1.8 for layer i) is SiO₂.

12. Multilayered lustre pigments according to Claim 1, where the material having a refractive index n > 1.8 for layer ii) is TiO₂ or ZnS.

13. Multilayered lustre pigments according to Claim 12, where the material having a refractive index n > 1.8 for layer ii) is TiO₂.

14. Multilayered lustre pigments according to Claim 7, where the selectively or non-selectively absorbent layer (B) consists of chromium, tungsten, cobalt, nickel, copper, molybdenum, aluminium, or magnetite, goethite, iron(III) oxide, cobalt oxide, chromium(III) oxide, titanium(III) oxide, titanium suboxide, vanadium oxide, pseudobrookite, ilmenite or cobalt sulfide, nickel sulfide, chromium sulfide, iron sulfide, tungsten sulfide, molybdenum sulfide, cerium sulfide or titanium nitride or titanium oxynitride or of mixtures thereof or of alloys of two or more metals.

15. Multilayered lustre pigments according to Claim 14, where the selectively or non-selectively absorbent layer (B) consists of chromium, aluminium or iron(III) oxide.

16. Multilayered lustre pigments according to Claim 1, where layer i) has a layer thickness of 200 to 600 nm.

17. Multilayered lustre pigments according to Claim 1, where layer ii) has a layer thickness of 200 to 350 nm.

18. Process for the preparation of the multilayered lustre pigments according to one or more of Claims 1 to 17, where a metallic substrate is coated with layers (A), (B) and optionally (C) by wet-chemical methods by precipitation, hydrolysis or reduction of metal salts in aqueous or organic medium and/or by CVD or PVD processes.

19. Use of the multilayered lustre pigments according to one or more of Claims 1 to 17 in paints, coatings, printing inks, plastics, cosmetic formulations, ceramic materials, paper, glasses, for laser marking, in security applications and in dry preparations and pigment preparations.

20. Paints, coatings, printing inks, plastics, cosmetic formulations, ceramic materials, paper, glasses, dry preparations, pigment preparations and materials for security applications, comprising a pigment according to Claims 1 to 17.

## Revendications

1. Pigments de lustre à multiples couches comprenant un substrat métallique présentant une épaisseur moyenne supérieure à 0,15 à 3 µm et comportant une pluralité de couches dont chacune entoure complètement le substrat, comprenant :
(A) au moins un module de couches constitué par :
i) une couche diélectrique incolore comprenant un matériau présentant un indice de réfraction n ≤ 1,8, laquelle couche présente une épaisseur de couche supérieure à 150 et allant jusqu'à 1000 nm, et
ii) une couche diélectrique incolore comprenant un matériau présentant un indice de réfraction n > 1,8, lequel matériau est du TiO₂ selon la modification rutile ou anatase, du ZrO₂, du SiO, du CeO₂, du HfO₂, du Pr₂O₃, du Y₂O₃, du Ta₂O₅, du ZnO, du Ce₂O₃, du BiOCl ou du ZnS ou un mélange de ceux-ci, et où la couche présente une épaisseur de couche de 30 à 500 nm, et
(B) une couche sélectivement ou non sélectivement absorbante, et
où le module de couches (A) est constitué par une couche i) sur le substrat métallique sous forme de flocons et par une couche ii) appliquée dessus ou
par une couche ii) sur le substrat métallique sous forme de flocons et par une couche i) appliquée dessus.

2. Pigments de lustre à multiples couches selon la revendication 1, où l'épaisseur de couche du substrat est entre 0,2 et 2 µm.

3. Pigments de lustre à multiples couches selon la revendication 1 ou 2, où le substrat métallique est sous forme de flocons.

4. Pigments de lustre à multiples couches selon les revendications 1 à 3, lesquels comportent de façon additionnelle une couche externe (C).

5. Pigments de lustre à multiples couches selon une ou plusieurs des revendications 1 à 4, où le substrat métallique est constitué par des métaux, des alliages de métaux ou des mélanges afférents.

6. Pigments de lustre à multiples couches selon une ou plusieurs des revendications 1 à 5, où le matériau présentant un indice de réfraction n ≤ 1,8 pour la couche i) est un oxyde de métal, un fluorure de métal, un hydrate d'oxyde de métal, un phosphate de métal ou un mélange afférent.

7. Pigments de lustre à multiples couches selon une ou plusieurs des revendications 1 à 6, où la couche sélectivement ou non sélectivement absorbante est constituée par un métal laissant passer au moins partiellement la lumière ou par un oxyde de métal, un sulfure de métal, un nitrure de métal sélectivement absorbant ou par des alliages ou des mélanges de deux ou plus de ceux-ci.

8. Pigments de lustre à multiples couches selon la revendication 5, où le substrat métallique est constitué par du fer, de l'acier, de l'acier inoxydable, de l'aluminium, du cuivre, du nickel, du chrome, du zinc, de l'étain, de l'argent, de l'or, du platine, du cobalt, des lanthanides, du titane, des mélanges ou des alliages de ceux-ci.

9. Pigments de lustre à multiples couches selon la revendication 6, où le matériau présentant un indice de réfraction n ≤ 1,8 pour la couche i) est du SiO₂, du SiO(OH)₂, de l'Al₂O₃, de l'AIO(OH), du B₂O₃, du MgF₂, du MgSiO₃ ou du phosphate d'aluminium ou un mélange de ceux-ci.

10. Pigments de lustre à multiples couches selon la revendication 9, où le matériau présentant un indice de réfraction n ≤ 1,8 pour la couche i) est du SiO₂, de l'Al₂O₃ ou du MgF₂ ou un mélange de ceux-ci.

11. Pigments de lustre à multiples couches selon la revendication 10, où le matériau présentant un indice de réfraction n ≤ 1,8 pour la couche i) est du SiO₂.

12. Pigments de lustre à multiples couches selon la revendication 1, où le matériau présentant un indice de réfraction n > 1,8 pour la couche ii) est du TiO₂ ou du ZnS.

13. Pigments de lustre à multiples couches selon la revendication 12, où le matériau présentant un indice de réfraction n > 1,8 pour la couche ii) est du TiO₂.

14. Pigments de lustre à multiples couches selon la revendication 7, où la couche sélectivement ou non sélectivement absorbante (B) est constituée par du chrome, du tungstène, du cobalt, du nickel, du cuivre, du molybdène, de l'aluminium, ou de la magnétite, de la goéthite, de l'oxyde de fer(III), de l'oxyde de cobalt, de l'oxyde de chrome(III), de l'oxyde de titane(III), du sous-oxyde de titane, de l'oxyde de vanadium, de la pseudobrookite, de l'ilménite ou du sulfure de cobalt, du sulfure de nickel, du sulfure de chrome, du sulfure de fer, du sulfure de tungstène, du sulfure de molybdène, du sulfure de cérium ou du nitrure de titane ou de l'oxynitrure de titane ou par des mélanges de ceux-ci ou par des alliages ou par des mélanges de deux ou plus de ces métaux.

15. Pigments de lustre à multiples couches selon la revendication 14, où la couche sélectivement ou non sélectivement absorbante (B) est constituée par du chrome, de l'aluminium ou de l'oxyde de fer(III).

16. Pigments de lustre à multiples couches selon la revendication 1, où la couche i) présente une épaisseur de couche de 200 à 600 nm.

17. Pigments de lustre à multiples couches selon la revendication 1, où la couche ii) présente une épaisseur de couche de 200 à 350 nm.

18. Procédé pour la préparation des pigments de lustre à multiples couches selon une ou plusieurs des revendications 1 à 17, où un substrat métallique est revêtu de couches (A), (B) et en option (C) au moyen de procédés chimiques par voie humide par précipitation, par hydrolyse ou par réduction de sels de métaux dans un milieu aqueux ou organique et/ou au moyen de procédés CVD (dépôt chimique en phase vapeur) or PVD (dépôt physique en phase vapeur).

19. Utilisation des pigments de lustre à multiples couches selon une ou plusieurs des revendications 1 à 17 dans des peintures, des revêtements, des encres d'impression, des matières plastiques, des formulations cosmétiques, des matériaux de céramique, du papier, des verres, pour le marquage laser, dans des applications de sécurité et dans des préparations sèches et des préparations de pigments.

20. Peintures, revêtements, encres d'impression, matières plastiques, formulations cosmétiques, matériaux de céramique, papier, verres, préparations sèches, préparations de pigments et matériaux pour des applications de sécurité, comprenant un pigment selon les revendications 1 à 17.
